# EUROPEAN PATENT SPECIFICATION

(11) **EP 2 333 872 B1**
(45) Date of publication and mention of the grant of the patent: **03.04.2013**
(21) Application number: 10190124.7
(22) Date of filing: 05.11.2010
(51) Int. Cl.: H01M 2/10, H01M 2/20, H01M 2/30

(54) **Large capacity battery pack**
Batteriepack mit hoher Kapazität
Bloc-batterie grande capacité

(30) Priority: 24.11.2009 KR 20090114053
(43) Date of publication of application: 15.06.2011
(73) Proprietor: Samsung SDI Co., Ltd., Gyeonggi-do (KR)
(72) Inventor: Han, Jung-Yup, Gyeonggi-do (KR)
(74) Representative: Walaski, Jan Filip

(56) References cited:
- EP-A1- 1 699 096
- US-A1- 2006 032 667
- US-A1- 2008 286 640

## Description

The present invention relates to a large capacity battery pack and an assembly of large capacity battery packs, and more particularly, to a large capacity battery pack and an assembly of large capacity battery packs, wherein the large capacity battery packs are stably electrically connected to each other since a terminal protrudes out of a casing and includes an extending unit that extends externally to surface-contact a bus bar.

Uninterruptible power supplies (UPSs) are power supply devices used in the event of an interruption of electric power. UPSs are used as a buffer between commercially supplied power and an electric load that requires a continuous power supply. UPSs may store power in a storage battery when commonly used, and stably, safely, and reliably supply the power stored in the storage battery to equipment during a power failure or when there is a problem with a power supply input terminal of the equipment.

US 2006/032667 discloses a battery pack in which lead terminals are reliably welded to terminal portions of batteries.

One or more embodiments of the present invention include a large capacity battery pack and an assembly of the large capacity battery packs, wherein an electrical connection is stably maintained while connecting a plurality of the large capacity battery packs by using a bus bar.

One or more embodiments of the present invention include a large capacity battery pack and an assembly of the large capacity battery packs, wherein a connection of high current terminals of a plurality of the large capacity battery packs is stably maintained even while connecting the large capacity battery packs to each other.

According to the invention, there is provided a large capacity battery pack according to claim 1.

According to an aspect of the present invention, the one end of the terminal may include a mobility preventing unit for preventing the casing from moving by being fixed to the inner side of the casing.

According to an aspect of the present invention, the mobility preventing unit may have a shape corresponding to a receiving groove formed on the casing and is inserted into the receiving groove.

According to an aspect of the present invention, one end of the tab may include a terminal connector that is bent to be inserted between the receiving groove and the mobility preventing unit.

According to an aspect of the present invention, the mobility preventing unit may include a through hole, the casing may include a screw groove at a location corresponding to the through hole, and the mobility preventing unit may be fixed to the casing by a screw combined to the screw groove through the through hole.

According to an aspect of the present invention, one end of the tab may include a terminal connector that is bent to be inserted between the screw and the mobility preventing unit.

According to an aspect of the present invention, the terminal connector comprises a through hole through which the screw penetrates.

According to an aspect of the present invention, the other end of the terminal may have a cylindrical shape and have a screw surface on an external surface, and the expanding unit may have a ring shape.

Additional aspects and/or advantages of the invention will be set forth in part in the description which follows and, in part, will be obvious from the description, or may be learned by practice of the invention.

These and/oi other aspects and advantages of the invention will become apparent and more readily appreciated from the following description of the embodiments, taken in conjunction with the accompanying drawings in which:
FIG. 1 is a perspective view of a large capacity battery pack according to an embodiment of the present invention;
FIG. 2 is an exploded perspective view of elements of the large capacity battery pack of FIG. 1;
FIG. 3 is a partial plan view of the large capacity battery pack of FIG. 1 including a terminal;
FIG. 4 is a perspective view illustrating an assembled state of the large capacity battery pack of FIG. 1;
FIG. 5 is a perspective view of an assembly of large capacity battery packs of FIG. 4; and
FIG. 6 is an exploded perspective view of a large capacity battery pack according to another embodiment of the present invention.

Reference will now be made in detail to embodiments of the present invention, examples of which are illustrated in the accompanying drawings, wherein like reference numerals refer to the like elements throughout. The embodiments are described below in order to explain the present invention by referring to the figures.

An uninterruptible power supply UPS includes a rectifier, an inverter, and a battery system. The capacity of the battery system included in the UPS differs according to the type of equipment to which power is to be supplied during a power failure, and is generally large because the battery system generally supports large production facilities or a computer system. Accordingly, the battery system for UPS has a structure in which the large capacity battery packs are connected to each other.

Each large capacity battery pack, also referred to as a battery pack, includes a plurality of secondary battery cells. In order to supply an amount of power required by equipment, high current terminals of the large capacity battery packs are connected to each other using a bus bar formed of a metal. However, since a structure of the high current terminal that extends out from and is supported by the large capacity battery pack is weak, a case or the high current terminal of the large capacity battery pack may be damaged or deformed while connecting the high current terminal to the bus bar. Thus, the electrical connection therebetween may deteriorate.

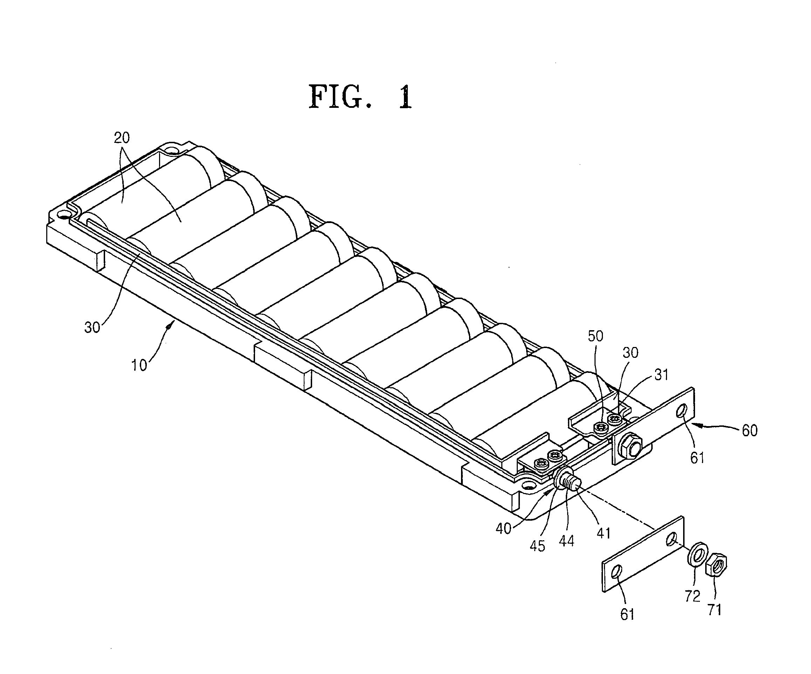

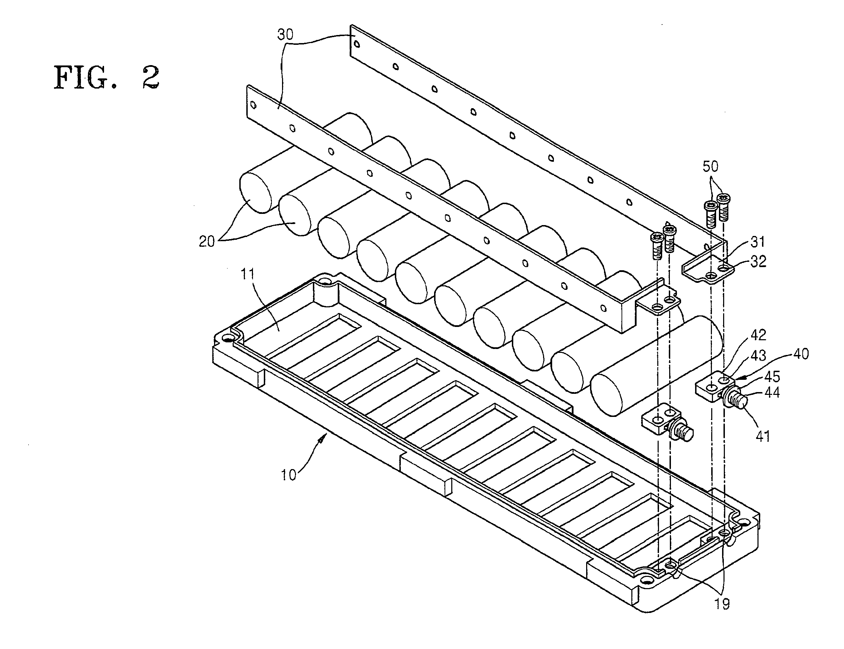

FIG. 1 is a perspective view of a large capacity battery pack according to an embodiment of the present invention. FIG. 2 is an exploded perspective view of elements of the large capacity battery pack of FIG. 1. The large capacity battery pack includes a casing 10, tabs 30, and terminals 40. The casing 10 accommodates a plurality of cells 20. Each of the tabs 30 is connected to a corresponding side of the cells 20 and is disposed on an inner side of the casing 10. Each of the terminals 40 is connected to a corresponding one of the tabs 30 and protrudes out of the casing 10.

As shown, each of the cells 20 is a cylindrical secondary battery. The cylindrical secondary battery may include a cylindrical can for accommodating an electrode assembly inside the cylindrical can, and a cap assembly for sealing the cylindrical can. The large capacity battery pack includes the plurality of cells 20, which are continuously disposed and have electrodes that are electrically connected to each other. The cells 20 used in the large capacity battery pack are not limited to the cylindrical secondary batteries as shown in FIG. 1, and may be a non-cylindrical secondary battery, such as a prismatic secondary battery or a pouch-type secondary battery.

The plurality of cells 20 are electrically connected to the tabs 30. As shown in FIG. 1, the cells 20 are connected in parallel by the tabs 30. However, a connecting method of the cells 20 is not limited thereto, and the cells 20 may be connected in series, or in a combination of in series and in parallel.

The casing 10 includes an installation space 11 having a size suitable for all the cells 20, regardless of the size and quantity of the cells 20, to be accommodated therein. Thus, the casing 10 is able to accommodate the plurality of cells 20.

The cells 20 are electrically connected to each other by the tabs 30 disposed on the inner side of the casing 10. Each shown tab 30 is formed of a conductive metal (such as, for example, nickel), and has a plate shape. The tab 30 extends along a surface of the inner side of the casing 10 so as to contact the electrodes of the cells 20 continuously disposed therein. The tab 30 may be connected to each electrode of the cells 20 via welding, but the invention is not limited thereto.

The terminals 40 are disposed at the casing 10. The terminals 40 supply a current from the cells 20 out of the casing 10 or supply a charging current to the cells 20. One end of each terminal 40 is connected to the corresponding tab 30 inside the casing 10, and another end 41 protrudes out the casing 10. The terminals 40 can be made of a conductive metal such as for example, nickel, copper, or the like.

The one end of the terminal 40 includes a mobility preventing unit 42. The mobility preventing unit 42 is fixed to the inner side of the casing 10 and prevents the terminal 40 from moving with respect to the casing 10. The other end 41 of the terminal 40 has a cylindrical shape and includes a screw surface 44 on an external surface thereof. The screw surface 44 of the terminal 40 is a region where a nut 71 is combined with the terminal 40 for fixing a bus bar 60 to the terminal 40. The bus bar 60 for connecting the high capacity battery packs includes a through hole 61 through which the terminal 40 penetrates.

The shown mobility preventing unit 42 of the terminal 40 is a block having a tetragonal shape, and includes a through hole 43. The casing 10 includes a screw groove 19 at a location corresponding to the through hole 43. The mobility preventing unit 42 is fixed to the casing 10 by a screw 50 that combines with the screw groove 19 of the casing 10 through the through hole 43. While described as having a tetragonal shape, it is understood that the shape of the mobility preventing unit 42 is not specifically limited. Further, while shown with the screw 50 being screwed into the screw groove 19, it is understood that the connection is not specifically limited such that the casing 10 could instead have a shaft with screw grooves extending outwardly through the through hole 43 and which is connected with a nut.

The other end 41 of the terminal 40 includes an expanding unit 45 externally extending from a surface of the other end 41. As shown, the expanding unit 45 is integrally formed as one body on the other end 41 and has a ring shape. A surface of the expanding unit 45 contacts a surface of the bus bar 60 such that the bus bar 60 is secured between the expanding unit 45 and the washer 72 by the nut 71. Accordingly, when a plurality of the large capacity battery packs are connected to each other, the electrical connection may be stably maintained. While shown as integral, it is understood that the expanding unit 45 need not be integral in all aspects of the invention. Furthermore, it will be understood that the expanding unit, also referred to as bus bar connection means, is electrically connected to the terminal 40 and increases the surface area over which electrical contact between the terminal 40 and the bus bar 60 is provided, so providing a stable electrical connection.

Each tab 30 includes a terminal connector 31 that is inserted between the corresponding mobility preventing unit 42 and the screw 50. The shown terminal connector 31 is formed as one end of the tab 30 and is bent relative to the tab 30 to be inserted between the mobility preventing unit 42 and the screw 50. The terminal connector 31 has a shape corresponding to the mobility preventing unit 42, so that surface contact between the terminal connector 31 and the mobility preventing unit 42 is relatively large.

A through hole 32 is formed in the terminal connector 31. The screw 50 penetrates the through hole 32 when combining the mobility preventing unit 42, the terminal connector 31, and the casing 10. Accordingly, as shown in FIG. 2, the screw 50 is combined to the screw groove 19 of the casing 10 by sequentially penetrating through the through hole 32 of the terminal connector 31 of the tab 30 and the through hole 43 of the mobility preventing unit 42. As such, the mobility preventing unit 42 is stably fixed to the casing 10 and the tab 30.

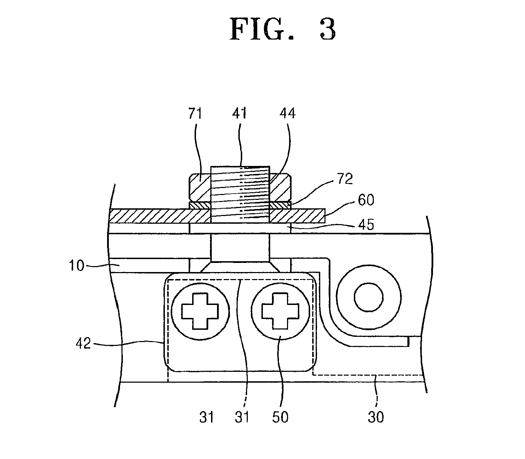

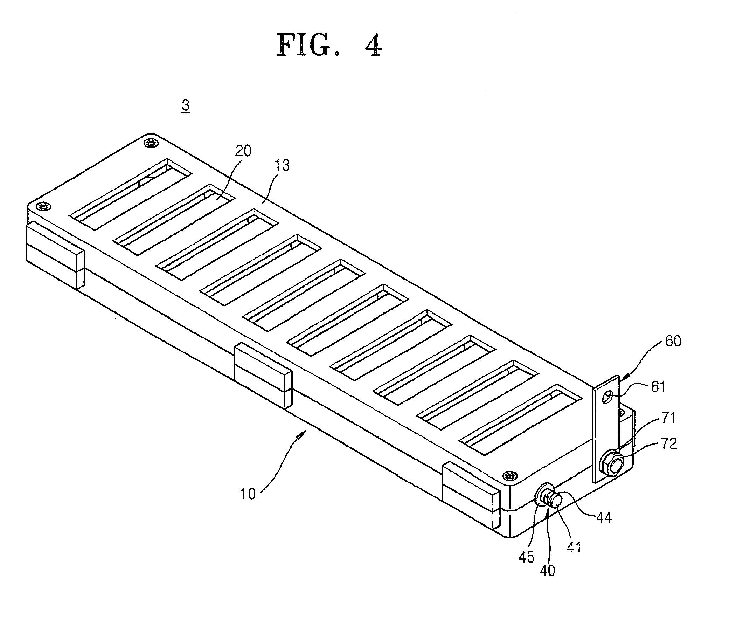

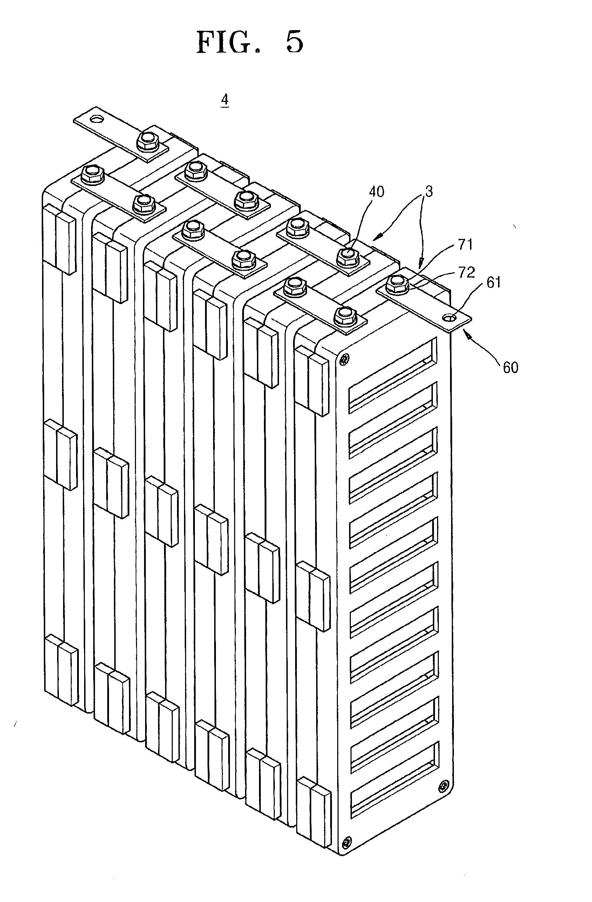

FIG. 3 is a partial plan view of the large capacity battery pack of FIG. 1 including the terminal 40. FIG. 4 is a perspective view illustrating an assembled large capacity battery pack 3. FIG. 5 is a perspective view of an assembly 4 of the large capacity battery packs 3 of FIG. 4. When the plurality of cells 20, the tab 30, and the terminal 40 are assembled inside the casing 10, a cover 13 is combined to the casing 10 to complete the large capacity battery pack 3 as shown in FIG. 4. Although not illustrated, a protection circuit may be additionally installed inside the casing 10. The protection circuit may detect unsafe conditions, such as an over current or a short-circuit, while charging or discharging the cells 20, prevent the cells 20 from being damaged, and protect the cells 20 from dangerous accidents, such as overheating, ignition, and explosion.

After the large capacity battery pack 3 is assembled, the other end 41 of the terminal 40 protrudes out of the casing 10. The terminal 40 protruding out of the casing 10 is inserted into the through hole 61 of the bus bar 60, and then combined with the nut 71 by disposing a washer 72 between the bus bar 60 and the nut 71 to fix the bus bar 60 between the nut 71 and the expanding unit 45.

As shown in FIG. 5, the plurality of large capacity battery packs 3 are assembled to have the same shape and are mechanically and electrically connected to each other by multiple bus bars 60. Each bus bar 60 is formed of a conductive material and connects the terminals 40 of adjacent pairs of the large capacity battery packs 3. As described above with reference to FIGS. 1 through 4, each bus bar 60 is combined to a corresponding the terminal 40 of the large capacity battery pack 3 using the washer 72 and the nut 71. The assembly 4 is prepared by continuously connecting the plurality of large capacity battery packs 3 using the bus bars 60 and the nuts 71. The number of large capacity battery packs 3 included in the assembly 4 may be determined based on required storage and discharge capacity.

When the bus bar 60 is combined to the terminal 40 of the casing 10, the mobility preventing unit 42 is strongly pulled in an upward direction of FIG. 3 due to the nut 71. However, since the mobility preventing unit 42 is maintained fixed to the casing 10 by the screw 50, the mobility preventing unit 42 does not move according to fixing force of the nut 71, while assembling the bus bar 60. At this time, since the surface of the expanding unit 45 of the terminal 40 contacts the bus bar 60, the electrical connection between the large capacity battery packs 3 is stably maintained.

Also, since the terminal connector 31 is inserted between the screw 50 and the mobility preventing unit 42, the connection between the tab 30 and the terminal 40 is stably maintained even when the bus bar 60 is being connected to the terminal 40. Further, the electric resistance of a region where the terminal connector 31 and the mobility preventing unit 42 contact each other may be decreased, since the connection region is large.

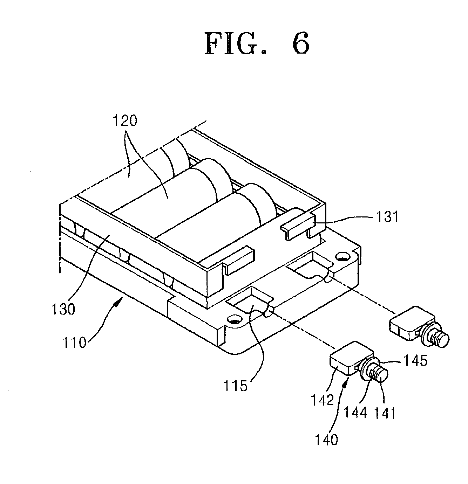

FIG. 6 is an exploded perspective view of a large capacity battery pack according to another embodiment of the present invention. The large capacity battery pack includes a casing 110, tabs 130, and terminals 140. The casing 110 accommodates a plurality of cells 120. Each tab 130 is connected to opposing sides of the cells 120 and is disposed on an inner side of the casing 110. Each terminal 140 is connected to the tab 130 and protrudes out of the casing 110.

The plurality of cells 120 are electrically connected to each other by the tab 130. The casing 110 accommodates the plurality of cells 120. The cells 120 are electrically connected to each other by the tab 120 disposed on the inner side of the casing 110. The tab 130 is formed of a conductive metal, such as nickel, and has a plate shape. The tab 130 extends along a surface of an inner side of the casing 110 so as to contact electrodes of the cells 120 continuously disposed. The tab 130 may be connected to each electrode of the cells 120 via welding, but the invention is not limited thereto.

The terminal 140 supplies a current from the cells 120 to out of the casing 110 or supplies a charged current to the cells 120. One end of the terminal 140 is connected to the tab 130 inside the casing 110, and another end 141 of the terminal 140 protrudes out of the casing 110. The one end of the terminal 140 includes a mobility preventing unit 142 for preventing the terminal 140 from moving with respect to the casing 110 by being fixed to the inner side of the casing 110. The other end 141 of the terminal 140 has a cylindrical shape and includes a screw surface 144 on an external surface thereof. The screw surface 144 of the terminal 140 is where a nut (not shown) for fixing a bus bar (not shown) for connecting a plurality of the large capacity battery packs is combined to the terminal 140. The terminal 140 can be made of a conductive metal such as for example, nickel, copper, or the like.

The mobility preventing unit 142 of the terminal 140 may be a block having a tetragonal shape as shown, but the invention is not limited thereto. The casing 110 includes a receiving groove 115 having a shape corresponding to an exterior shape of the mobility preventing unit 142. Accordingly, the mobility preventing unit 142 is inserted into the receiving groove 115 of the casing 110. Thus, the mobility preventing unit 142 does not rotate or move due to the receiving groove 115 while connecting the bus bar to the terminal 140.

When the bus bar is combined to the terminal 140 of the casing 110, the mobility preventing unit 142 is strongly pulled according to the nut combined to the screw surface 144 of the terminal 140. However, since the mobility preventing unit 142 is accommodated in the receiving groove 115 of the casing 110, the mobility preventing unit 142 does not move according to fixing force of the nut while assembling the bus bar.

The other end 141 of the terminal 140 includes an expanding unit 145 externally extending from a surface of the other end 141. The shown expanding unit 145 is formed as one body integrally connected to the other end 141 and has a ring shape. A surface of the expanding unit 145 contacts a surface of the bus bar. In other words, since the expanding unit 145 of the terminal 140 contacts the bus bar while the terminal 140 is combined to the bus bar by using the nut, the electrical connection of the large capacity battery packs may be stably maintained. While shown as integral, it is understood that the expanding unit 145 need not be integral in all embodiments.

One end of the tab 130 includes a terminal connector 131 inserted between the mobility preventing unit 142 and the receiving groove 115. The terminal connector 131 is bent from the one end of the tab 130 to be inserted into the receiving groove 115. Accordingly, when the terminal connector 131 is inserted between the receiving groove 115 and the mobility preventing unit 142 while the mobility preventing unit 142 is accommodated in the receiving groove 115 of the casing 110, the cells 120 are electrically connected to the mobility preventing unit 142 of the terminal 140 through the terminal connector 131 of the tab 130.

By manufacturing the mobility preventing unit 142 to be substantially identical in size to the receiving groove 115, the mobility preventing unit 142 may be forcibly inserted into the receiving groove 115. Accordingly, the mobility preventing unit 142 may be stably fixed to the casing 110, while the connection between the tab 130 and the mobility preventing unit 142 is stable.

As described above, according to the one or more of the above embodiments of the present invention, in a large capacity battery pack, a terminal protruding out of a casing includes an expanding unit that externally extends, and a surface of the expanding unit contacts a surface of a bus bar. Accordingly, the electrical connection between a plurality of the large capacity battery packs may be stable.

Also, since one end of the terminal disposed inside the casing includes a mobility preventing unit for preventing the terminal from moving, the mechanical connection of the terminals of the large capacity battery packs may be stable while assembling the bus bar onto the large capacity battery packs by using the nut.

Further, since an end of a tab is inserted between the mobility preventing unit and a screw or between the mobility preventing unit and a receiving groove of the casing, the electrical connection between cells in the casing and the terminal is maintained stable.

Although a few embodiments of the present invention have been shown and described, it would be appreciated by those skilled in the art that changes may be made in this embodiment without departing from the principles of the invention, the scope of which is defined in the claims.

## Claims

1. A large capacity battery pack comprising;
a plurality of cells (20);
a casing (10) which accommodates the plurality of cells;
a tab (30) that is connected to the plurality of cells and is disposed on an inner side of the casing; and
a terminal (40) having a first end (42) connected to the tab inside the casing, and a second end (41) protruding out of the casing, the second end including a first portion and a bus bar connection means (45) extending radially from the first portion for connecting the battery pack to another battery pack using a conductive bus bar (60),
wherein the first portion is configured for insertion through a hole in the bus bar, and the bus bar connection means is arranged to provide a surface to contact a corresponding surface of the bus bar.

2. The large capacity battery pack of claim 1, wherein the first end of the terminal comprises a mobility preventing unit (42) for preventing the terminal from moving relative to the casing by being fixed to the inner side of the casing.

3. The large capacity battery pack of claim 2, wherein the casing further comprises a receiving groove (115) shaped to receive the mobility preventing unit, wherein the mobility preventing unit is inserted into the receiving groove.

4. The large capacity battery pack of claim 3, wherein one end of the tab comprises a terminal connector (131) that is bent and is inserted between the receiving groove and the mobility preventing unit.

5. The large capacity battery pack of claim 2, further comprising a screw (50), wherein:
the mobility preventing unit includes a through hole (43),
the casing includes a screw groove (19) at a location corresponding to the through hole, and
the mobility preventing unit is fixed to the casing by the screw being combined to the screw groove through the through hole.

6. The large capacity battery pack of claim 5, wherein one end of the tab comprises a terminal connector (31) that is bent and is inserted between the screw and the mobility preventing unit.

7. The large capacity battery pack of claim 6, wherein the terminal connector comprises a through hole (32) through which the screw penetrates.

8. The large capacity battery pack of any one of the preceding claims, wherein:
the second end of the terminal has a cylindrical shape and has a screw surface (44, 144) on an external surface, and
the bus bar connection means has a ring shape (45).

9. The large capacity battery pack of any one of the preceding claims, wherein the bus bar connection means is integrally formed with the terminal.

10. An assembly of large capacity battery packs (4), comprising:
a plurality of large capacity battery packs, each according to any one of the preceding claims;
a conductive bus bar (60) comprising via holes (61) through which the terminals of the large capacity battery packs penetrate so as to connect the terminals of at least two of the plurality of large capacity battery packs together.

11. The assembly of claim 10, wherein the second end of each of the terminals comprises a screw surface (44, 144), the assembly further comprising a nut (71) for fixing the bus bar to the terminal so that the bus bar contacts a surface of the bus bar connection means.

## Patentansprüche

1. Batteriepack mit hoher Kapazität, umfassend:
eine Vielzahl von Zellen (20);
ein Gehäuse (10), welches die Vielzahl von Zellen aufnimmt;
eine Leiste (30), die mit der Vielzahl von Zellen verbunden und an einer Innenseite des Gehäuses angeordnet ist; und
eine Klemme (40) mit einem ersten Ende (42), das mit der Leiste innerhalb des Gehäuses verbunden ist, und einem zweiten Ende (41), das aus dem Gehäuse heraussteht, wobei das zweite Ende einen ersten Abschnitt sowie ein Sammelschienenverbindungsmittel (45) aufweist, das sich radial von dem ersten Abschnitt aus erstreckt, um den Batteriepack mit einem anderen Batteriepack unter Verwendung einer leitenden Sammelschiene (60) zu verbinden,
wobei der erste Abschnitt zum Einführen durch ein Loch in der Sammelschiene ausgeführt ist und das Sammelschienenverbindungsmittel zur Bereitstellung einer Fläche für die Kontaktierung einer entsprechenden Fläche der Sammelschiene angeordnet ist.

2. Batteriepack mit hoher Kapazität nach Anspruch 1, wobei das erste Ende der Klemme eine Beweglichkeitverhinderungseinheit (42) umfasst, um eine Bewegung der Klemme relativ zum Gehäuse durch Befestigung an der Innenseite des Gehäuses zu verhindern.

3. Batteriepack mit hoher Kapazität nach Anspruch 2, wobei das Gehäuse ferner eine Aufnahmeaussparung (115) umfasst, die zur Aufnahme der Beweglichkeitverhinderungseinheit ausgeformt ist, wobei die Beweglichkeitverhinderungseinheit in die Aufnahmeaussparung eingesetzt ist.

4. Batteriepack mit hoher Kapazität nach Anspruch 3, wobei ein Ende der Leiste einen Klemmenverbinder (131) umfasst, der gebogen und zwischen der Aufnahmeaussparung und der Beweglichkeitverhinderungseinheit eingesetzt ist.

5. Batteriepack mit hoher Kapazität nach Anspruch 2, ferner umfassend eine Schraube (50), wobei:
die Beweglichkeitverhinderungseinheit ein Durchgangsloch (43) aufweist,
das Gehäuse eine Schraubenaussparung (19) an einer dem Durchgangsloch entsprechenden Stelle aufweist, und
die Beweglichkeitverhinderungseinheit an dem Gehäuse befestigt ist, indem die Schraube durch das Durchgangsloch mit der Schraubenaussparung verbunden ist.

6. Batteriepack mit hoher Kapazität nach Anspruch 5, wobei ein Ende der Leiste einen Klemmenverbinder (31) umfasst, der gebogen und zwischen der Schraube und der Beweglichkeitverhinderungseinheit eingesetzt ist.

7. Batteriepack mit hoher Kapazität nach Anspruch 6, wobei der Klemmenverbinder ein Durchgangsloch (32) aufweist, durch welches die Schraube hindurchgeführt ist.

8. Batteriepack mit hoher Kapazität nach einem der vorstehenden Ansprüche, wobei:
das zweite Ende der Klemme zylinderförmig ist und auf einer Außenfläche eine Schraubenfläche aufweist (44, 144) aufweist, und
das Sammelschienenverbindungsmittel eine Ringform (45) aufweist.

9. Batteriepack mit hoher Kapazität nach einem der vorstehenden Ansprüche, wobei das Sammelschienenverbindungsmittel einstückig mit der Klemme ausgebildet ist.

10. Anordnung von Batteriepacks mit hoher Kapazität (4), umfassend:
eine Vielzahl von Batteriepacks mit hoher Kapazität, jeweils nach einem der vorstehenden Ansprüche;
eine leitende Sammelschiene (60) umfassend Verbindungskontaktlöcher (61), durch welche die Klemmen der Batteriepacks mit hoher Kapazität hindurchgeführt sind,
um die Klemmen von mindestens zwei der Vielzahl von Batteriepacks mit hoher Kapazität miteinander zu verbinden.

11. Anordnung nach Anspruch 10, wobei das zweite Ende jeder der Klemmen eine Schraubenfläche (44, 144) aufweist, wobei die Anordnung ferner eine Schraubenmutter (71) umfasst, zum Befestigen der Sammelschiene an der Klemme, so dass die Sammelschiene mit einer Fläche des Sammelschienenverbindungsmittels in Kontakt steht.

## Revendications

1. Bloc-batterie de grande capacité, comprenant :
une pluralité de cellules (20) ;
un boîtier (10) qui reçoit la pluralité de cellules ;
une patte (30) qui est reliée à la pluralité de cellules et qui est disposée sur un côté intérieur du boîtier ; et
une borne (40) comportant une première extrémité (42) connectée à la patte à l'intérieur du boîtier, et une deuxième extrémité (41) faisant saillie hors du boîtier, la deuxième extrémité comprenant une première partie et des moyens de connexion de barre-bus (45) s'étendant radialement à partir de la première partie de façon à connecter le bloc-batterie à un autre bloc-batterie à l'aide d'une barre-bus conductrice (60),
dans lequel la première partie est configurée pour l'insertion à travers un trou dans la barre-bus, et les moyens de connexion de barre-bus sont configurés de façon à procurer une surface pour venir en contact avec une surface correspondante de la barre-bus.

2. Bloc-batterie de grande capacité selon la revendication 1, dans lequel la première extrémité de la borne comprend une unité de prévention de mobilité (42) pour empêcher la borne de se déplacer par rapport au boîtier, en étant fixée au côté intérieur du boîtier.

3. Bloc-batterie de grande capacité selon la revendication 2, dans lequel le boîtier comprend de plus une rainure de réception (115) formée de façon à recevoir l'unité de prévention de mobilité, l'unité de prévention de mobilité étant insérée dans la rainure de réception.

4. Bloc-batterie de grande capacité selon la revendication 3, dans lequel une extrémité de la patte comprend un connecteur de borne (131) qui est incurvé et qui est inséré entre la rainure de réception et l'unité de prévention de mobilité.

5. Bloc-batterie de grande capacité selon la revendication 2, comprenant de plus une vis (50), dans lequel :
l'unité de prévention de mobilité comprend un trou traversant (43),
le boîtier comprend une rainure de vis (19) en un emplacement correspondant au trou traversant, et
l'unité de prévention de mobilité est fixée au boîtier par la combinaison de la vis avec la rainure de vis par l'intermédiaire du trou traversant.

6. Bloc-batterie de grande capacité selon la revendication 5, dans lequel une extrémité de la patte comprend un connecteur de borne (31) qui est incurvé et qui est inséré entre la vis et l'unité de prévention de mobilité.

7. Bloc-batterie de grande capacité selon la revendication 6, dans lequel le connecteur de borne comprend un trou traversant (32) à travers lequel pénètre la vis.

8. Bloc-batterie de grande capacité selon l'une quelconque des revendications précédentes, dans lequel :
la deuxième extrémité de la borne a une forme cylindrique et comporte une surface de vis (44, 144) sur une surface extérieure, et
les moyens de connexion de barre-bus ont une forme annulaire (45).

9. Bloc-batterie de grande capacité selon l'une quelconque des revendications précédentes, dans lequel les moyens de connexion de barre-bus sont formés d'un seul tenant avec la borne.

10. Ensemble de blocs-batteries de grande capacité (4), comprenant :
une pluralité de blocs-batteries de grande capacité, chacun selon l'une quelconque des revendications précédentes ;
une barre-bus conductrice (60) comprenant des trous de passage (61) à travers lesquels les bornes des blocs-batteries de grande capacité pénètrent de façon à connecter les bornes d'au moins deux de la pluralité de blocs-batteries de grande capacité entre elles.

11. Ensemble selon la revendication 10, dans lequel la deuxième extrémité de chacune des bornes comprend une surface de vis (44, 144), l'ensemble comprenant de plus un écrou (71) pour fixer la barre-bus à la borne de telle sorte que la barre-bus vienne en contact avec une surface des moyens de connexion de barre-bus.
